(19) Europäisches Patentamt / European Patent Office / Office européen des brevets

(11) **EP 1 970 109 A1**

(12) **EUROPEAN PATENT APPLICATION**

(43) Date of publication:
**17.09.2008 Bulletin 2008/38**

(51) Int Cl.:
*B01D 17/04* (2006.01)   *C10G 32/02* (2006.01)
*C10G 33/02* (2006.01)   *C02F 1/30* (2006.01)

(21) Application number: **07250955.7**

(22) Date of filing: **07.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **BP EXPLORATION OPERATING COMPANY LIMITED**
**Sunbury-on-Thames TW16 7BP (GB)**

(72) Inventor: **The designation of the inventor has not yet been filed**

(74) Representative: **Collins, Frances Mary et al**
**BP International Limited,**
**Group Patents and Agreements,**
**Chertsey Road**
**Sunbury-on-Thames,**
**Middlesex TW16 7LN (GB)**

(54) **A method of separating an oil phase and an aqueous phase**

(57)   A method for separating a multiphase fluid comprising an aqueous phase dispersed in a liquid hydrocarbon phase into its component phases, the method comprising:

(a) passing the multiphase fluid through an electromagnetic radiation treatment zone wherein the aqueous phase of the multiphase fluid is selectively heated by subjecting the multiphase fluid to electromagnetic radiation of wavelength IMHz to 10GHz for an exposure time of less than 5 seconds, with a power density in the aqueous phase of at least $10^5$ Wm$^{-3}$;

(b) passing the irradiated multiphase fluid from the electromagnetic radiation treatment zone to a separator wherein the multiphase fluid is separated into its component liquid hydrocarbon and aqueous phases; and

(c) withdrawing a liquid hydrocarbon stream and an aqueous stream from the separator.

**Description**

The present invention relates to a method for separating a multiphase fluid comprising an aqueous phase dispersed in a liquid hydrocarbon phase, and in particular, for separating emulsions of produced liquid hydrocarbons and water.

In practice, produced liquid hydrocarbons, in particular, crude oils, form three layers in a separation vessel: an upper liquid hydrocarbon layer, a lower aqueous layer and an intermediate emulsion layer (often referred to as a "rag layer"). The emulsion of the intermediate emulsion layer may be stabilized by naturally occurring surfactants in the produced fluid. The demulsification of the intermediate emulsion layer can be problematic.

The use of microwave radiation to aid demulsification of water-in-oil emulsions is known. For example, US 4,582,629 describes a method for enhancing the separation of oil and water dispersions and emulsions by treating the same with microwave radiation, whether alone or in conjunction with more conventional separating devices. Thus, the emulsion or dispersion is subjected to microwave radiation in the range of one millimeter to 30 centimetres for a time sufficient to separate the dispersion or emulsion to the extent desired. Normally the microwave radiation will be used only for a short period of time, and the emulsion or dispersion will be heated to separation temperature by conventional means. The method is said to be applicable to both oil external and water external systems i.e. water-in-oil and oil-in-water emulsions respectively. The emulsion or dispersion is normally treated at a power level of from about 1 Watt to about 500 Watts per gallon (264.2 to 132,086.4 Watts per m$^{-3}$) of emulsion or dispersion. It is said that this treatment is not sufficient to raise the temperature of the emulsion to levels normally used for separation, but will greatly enhance the resultant separation once heating is completed by conventional means. It is also said that the microwave radiation may be used in any desired wattage, but normally the higher the wattage used to produce the microwave radiation, the more quickly the dispersion or emulsion can be separated. The power used will range from a level of from about 300 to about 50,000 Watts (0.0003 to 0.05 Megawatts) and normally microwave projectors in the wattage range of from about 800 to 1000 watts will be used. For continuous treatment, a power level of from about 1 watt to about 500 watts per gallon of emulsion or dispersion will be used. The method of US 4,582,629 may be used in combination with conventional treatment vessels such as heat treaters, which are tanks modified to add heat and provide residence time in the system. Microwaves would either be used directly in the tank to generate heat and interfacial disruption, or in a section of a flow line just ahead of the tank. Likewise, the method could be used in washtanks or gun barrel treaters, either in the tank or in the pipeline leading into the tank. However, it has now been found that microwave irradiation of the entire flow of multiphase fluid in a section of the flow line just ahead of the tank or microwave irradiation of the entire contents of a tank is uneconomic in terms of the power demands for the microwave generator.

US 4,810,375 relates to a method of enhancing the separation of oil and water emulsions and dispersions by treating the same with microwave radiation, whether alone or in conjunction with more conventional separating devices. In the method of US 4,810,375, an oil-water emulsion or dispersion is conveyed via an inlet to an applicator where it is heated by microwave energy from a power source through a circulator and wave guide. The heated stream exits the applicator through an outlet to a separator vessel where the stream separates into an upper oil phase and a lower oily water phase. The separated phases are then recovered through outlets on the separator vessel. Thus, the entire feed stream to the separator vessel is subjected to microwave irradiation resulting in the separation of the feed into two layers in the separator vessel. As discussed above, microwave irradiation of the entire feed stream to the separator vessel is uneconomic in terms of the power demands for the microwave generator.

Where a multiphase fluid comprising an aqueous phase dispersed in a liquid hydrocarbon phase flows through an electromagnetic radiation treatment zone, it has now been found that rapid and selective heating of the aqueous phase of the multiphase fluid may be achieved by irradiating the multiphase fluid with electromagnetic radiation having a wavelength of from 1 MHz to 10 GHz under certain critical conditions. This rapid and selective heating of the aqueous phase results in an increased rate of coalescence of emulsified droplets of aqueous phase and of macroscopic domains of aqueous phase that are dispersed in the liquid hydrocarbon phase of the multiphase fluid thereby aiding subsequent separation of the multiphase fluid into its component phases.

Thus, the present invention relates to a method for separating a multiphase fluid comprising an aqueous phase dispersed in a liquid hydrocarbon phase into its component phases, the method comprising:

>    (a) passing the multiphase fluid through an electromagnetic radiation treatment zone wherein the aqueous phase of the multiphase fluid is selectively heated by subjecting the multiphase fluid to electromagnetic radiation of wavelength 1MHz to 10GHz for an exposure time of less than 5 seconds, with a power density in the aqueous phase of at least $10^5$ Wm$^{-3}$;
>    (b) passing the irradiated multiphase fluid from the electromagnetic radiation treatment zone to a separator wherein the multiphase fluid is separated into its component liquid hydrocarbon and aqueous phases; and
>    (c) withdrawing a liquid hydrocarbon stream and an aqueous stream from the separator.

By the aqueous phase being "dispersed" in the liquid hydrocarbon phase is meant that a bulk layer of aqueous phase has not separated from the multiphase fluid prior to passing the multiphase fluid through the electromagnetic radiation treatment zone. The aqueous phase may be dispersed in the liquid hydrocarbon phase of the multiphase fluid in the form of emulsified droplets and/or of macroscopic aqueous domains.

Preferably, the multiphase fluid is a produced fluid from a hydrocarbon production well. The liquid hydrocarbon phase of the produced multiphase fluid may be selected from crude oils, crude oil blends, and gas condensates. The aqueous phase of the produced multiphase fluid may be selected from connate water, injection water and condensed water. Crude oils often contain naturally occurring surfactants. Accordingly, emulsified droplets of aqueous phase may arise spontaneously when a mixture of crude oil and water is subjected to shearing, for example, in a production well, choke, or a section of flow line (thereby imparting the energy required to form the emulsified droplets). Macroscopic aqueous domains may arise owing to the multiphase fluid being sufficiently well-mixed that a bulk layer of aqueous phase does not separate from the produced fluid. Thus, the flow rate of the produced fluid immediately upstream of the electromagnetic radiation treatment zone should be sufficiently high that the produced fluid does not adopt a laminar or stratified flow regime. Where the multiphase fluid is passed through a flow line prior to being passed through the electromagnetic treatment zone, the internal diameter of the flow line is preferably less than 36 inches in order to avoid the flow rate reducing to such an extent that the multiphase fluid adopts such a stratified or laminar flow regime. However, in the event that a bulk layer of aqueous phase has separated from the multiphase fluid, a mixing device may be provided upstream of the electromagnetic radiation treatment zone, for re-dispersing the bulk layer of aqueous phase in the liquid hydrocarbon phase.

Optionally, the produced fluid comprises a gaseous hydrocarbon phase, in particular, natural gas. The optional gaseous hydrocarbon phase of the produced fluid may be entrained in the liquid hydrocarbon and aqueous phases. Alternatively, at least part of the optional gaseous hydrocarbon phase may separate into a headspace of the electromagnetic radiation treatment zone.

Where the produced fluid comprises a gaseous hydrocarbon phase, the gaseous hydrocarbon phase may be separated from the multiphase fluid in step (b). In other words, the separator employed in step (b) is a gaseous hydrocarbon-liquid hydrocarbon-water separator. Accordingly, a gaseous hydrocarbon stream is withdrawn from the separator in step (c). Alternatively, the gaseous hydrocarbon phase may be separated from the liquid hydrocarbon phase and the aqueous phase in a gas separator upstream of a liquid hydrocarbon-water separator.

It is also envisaged that the multiphase fluid may arise in a refinery operation and may therefore comprise a crude oil distillate fraction having an aqueous phase dispersed therein. Examples of crude oil distillate fractions include gasoline, gas oil, diesel, jet fuel, kerosene, heating oil and mixtures thereof.

The amount of thermal energy deposited into a material due to electromagnetic irradiation of the material is dependent upon the electric field of the electromagnetic radiation, the frequency of the electromagnetic radiation, and the dielectric properties of the material. The liquid hydrocarbon phase and any gaseous hydrocarbon phase of the multiphase fluid are substantially transparent to the electromagnetic radiation, while the aqueous phase has a high dielectric constant and loss. The aqueous phase therefore strongly absorbs the electromagnetic radiation subsequently dissipating the resulting stored energy as heat. Accordingly, the electromagnetic radiation selectively heats the aqueous phase of the multiphase fluid thereby facilitating coalescence of the emulsified droplets of the aqueous phase and/or the macroscopic domains of aqueous phase that are dispersed in the liquid hydrocarbon phase. Typically, at least 90%, preferably, at least 95% of the electromagnetic radiation is absorbed by the dispersed aqueous phase of the multiphase fluid thereby selectively heating the aqueous phase. Suitably, the electromagnetic radiation selectively heats the dispersed aqueous phase to a temperature of at least 50°C, preferably, to a temperature in the range 60 to 100°C. Typically, the temperature differential that develops between the selectively heated aqueous phase and the liquid hydrocarbon phase of the multiphase fluid is at least 20°C, preferably, at least 50°C.

The electric field portion of the electromagnetic radiation and the exposure time of the multiphase fluid to the electromagnetic radiation are related. Accordingly, for a given multiphase fluid, the higher the electric field, the shorter the exposure time required to selectively heat the dispersed aqueous phase of the multiphase fluid. The power input required to selectively heat the dispersed aqueous phase also increases with increasing amounts of dispersed aqueous phase. Thus, the power density and/or the exposure time required to selectively heat the dispersed aqueous phase increases with increasing amounts of aqueous phase dispersed in the liquid hydrocarbon phase of the multiphase fluid. Typically, the amount of aqueous phase that is dispersed in the liquid hydrocarbon phase of the multiphase fluid is in the range of 0.5 to 50% by weight (based on the total weight of the aqueous phase and the liquid hydrocarbon phase).

The aqueous phase of the multiphase fluid may have salts dissolved therein. This is advantageous owing to the ionic mobility of the dissolved salts enhancing the selective heating of the dispersed aqueous phase. Preferably, the aqueous phase of the multiphase fluid has a total salinity of at least 1,000 ppm, for example, at least 5,000 ppm. Examples of dissolved salts include sodium chloride.

The power density in the aqueous phase of the multiphase fluid can be approximated from the following Equation:

$$P_d = 2\pi.f.\varepsilon_o.\varepsilon''.E_o{}^2.$$

$P_d$ is the power density (watts/m$^3$)

f is the frequency of the applied energy (Hertz)

$\varepsilon_o$, is the permittivity of free space (8.854x10$^{-12}$ F/m)

$\varepsilon''$ is the dielectric loss factor of the material (aqueous phase)

$E_o$ is the magnitude of the electric field inside the material (volts/m)

Suitably, the power density in the aqueous phase of the multiphase fluid in the electromagnetic radiation treatment zone is at least 10x10$^5$ Wm$^{-3}$, preferably, at least 10x10$^9$ Wm$^{-3}$.

Typically, the multiphase fluid is exposed to the electromagnetic radiation in the electromagnetic radiation treatment zone for less than 5 seconds, preferably, less than 3 seconds, more preferably, less than 1 second. Suitably, the exposure time may be achieved by selecting a flow rate of the multiphase fluid through the electromagnetic radiation treatment zone that achieves the desired exposure time. Generally, the exposure time will be fixed by the flow rate of the multiphase fluid through an existing produced fluid flow line or through an existing refinery flow line. Accordingly, the electric field strength is varied to produce the desired treatment regime.

Without wishing to be bound by any theory it is believed that the relatively high power density of the electromagnetic radiation together with the relatively short exposure time results in rapid and selective heating of the dispersed aqueous phase in step (a) thereby enhancing separation of the aqueous and liquid hydrocarbon phases in the separator in step (b) of the present invention.

Preferably, the electromagnetic radiation is microwave radiation or radio frequency radiation. Microwave or radio frequency radiation is defined herein as electromagnetic radiation in the frequency range of 1 MHz to 10 GHz. However, in practice, the frequency of microwave radiation that is licensed for use in industrial processes is restricted to 13.56 MHz, 27.12 MHz, 40 MHz, 80 MHz, 433 MHz, 896 MHz, 915 MHz, 922 MHz and 2.45 GHz in order to avoid the risk of any accidentally emitted microwave radiation disrupting communications equipment.

Suitably, the desired power density is produced by developing a distribution of electric field such that the maxima in the electric field are sufficiently high to enhance the rate of separation of the multiphase fluid into its component phases. Typically, the electric field is contained within an applicator having dimensions (of size) that allow the applicator to comprise part of a flow line.

Suitably, radio frequency radiation may be produced using at least two electrodes that are positioned spaced apart within the electromagnetic radiation treatment zone.

Suitably, microwave radiation may be produced using at least one microwave generator, typically a plurality of microwave generators. The number of microwave generators will be dependent upon the power of each generator and the total power input required for selectively heating the dispersed aqueous phase of the multiphase fluid.

The multiphase fluid may be subjected to microwave irradiation in the presence of an additional heating source, an electrostatic field, an acoustic field, or combinations thereof in order to further enhance coalescence of the emulsified droplets of aqueous phase and/or of the macroscopic domains of aqueous phase.

Where a part or section of flow line comprises a multimode microwave cavity, the part or section of the flow line may be provided with at least one microwave transparent window through which the microwave radiation may be transmitted into the multiphase fluid from a wave guide that is external to the section of flow line. Suitable external wave guides would be well known to the person skilled in the art. Typically, the external wave guide is a hollow pipe wave guide which may be pressurized, for example, with dry process air. Typically, the window in the section of flow line is formed from Kevlar™, sapphire, quartz glass, or any other suitable material that is transparent to microwave radiation. Typically, the section of flow line may be provided with a plurality of windows through which microwave radiation is transmitted from dedicated wave guides into the multiphase fluid. Preferably, the windows in the section of flow line are spaced apart in an annular pattern in order to provide a uniform field strength within the flowing multiphase fluid.

It is also envisaged that microwave radiation may be transmitted into the multiphase fluid using a waveguide that penetrates through the wall of the section of flow line. Where the section of flow line is at an elevated pressure, a pressure seal is provided between the wave guide and the wall of the section of flow line, for example, a flange connector. Suitably, the wave guide that penetrates through the wall of the section of flow line, is a hollow pipe wave guide having a first end and a second end wherein the first end receives microwave radiation from the microwave generator and the second end of the wave guide is provided with a window that is transparent to microwave radiation such that the microwave radiation is transmitted into the multiphase fluid where the microwave radiation is selectively absorbed by the dispersed aqueous phase (emulsified droplets of aqueous phase and/or macroscopic aqueous domains) thereby resulting in coalescence of the droplets and/or domains. Generally, the hollow pipe wave guide is formed from a conductor such as silver, copper, aluminium or brass and is filled with nitrogen or another inert gas of high dielectric strength. If necessary, the hollow pipe wave guide is provided with an outer housing that is capable of withstanding the elevated pressure prevailing in the section of flow line. The window in the wave guide may be formed from, for example, Kevlar™ , sapphire, or quartz glass, or any other suitable material that is transparent to microwave radiation and is capable of withstanding the pressure in the section of flow line. Where the section of flow line is at an elevated pressure, a pressure seal is provided between the window and the wave guide. The second end of the wave guide may be located within the flow of multiphase fluid or where there is a headspace in the flow line, the wave guide may be located in the headspace such that the microwave radiation is transmitted through the window in the wave guide and the gaseous phase that has separated into the headspace and into the multiphase fluid. Where the multiphase fluid is treated as it flows through a section of flow line, it is envisaged that the flow line may be of a substantially circular cross-section. Typically, a plurality of microwave generators are employed, each of which has a wave guide that penetrates through the wall of the section of flow line. Preferably, the wave guides that penetrate the wall of the section of flow line are arranged spaced apart in an annular pattern around the section of flow line.

It is preferred that the multiphase fluid is treated in an electromagnetic radiation treatment zone that is arranged immediately upstream of the separator, for example, within 1 metre of the separator vessel.

Where the treated multiphase fluid is separated in step (b) using a separator vessel, the multiphase fluid separates into an upper liquid hydrocarbon layer and a lower aqueous layer. Typically, a liquid hydrocarbon stream is removed from the upper liquid hydrocarbon layer and an aqueous stream is removed from the lower aqueous layer. An intermediate emulsion layer comprising a water-in-oil emulsion may also form between the upper liquid hydrocarbon layer and lower aqueous layer. However, it has been found that the amount of intermediate emulsion layer is substantially reduced compare with operation of the separation vessel in the absence of selective heating of the aqueous phase of the multiphase fluid in an electromagnetic radiation treatment zone. Thus, the rate at which any intermediate emulsion layer builds up in the separator vessel is substantially reduced. Accordingly, it may not be necessary to heat the contents of the downstream separator to effect separation of the multiphase fluid into its component phases. Alternatively, the heating duty for the downstream separator vessel may be substantially reduced compared with operating a separator vessel in the absence of selective heating of the aqueous phase in an electromagnetic radiation treatment zone immediately before the separator vessel. A further advantage of the present invention is that the residence time of the multiphase fluid in the separator vessel is substantially reduced compared with operation of the separator vessel in the absence of selective heating of the aqueous phase in the electromagnetic radiation treatment zone. Suitably, the residence time of the multiphase fluid in the separator vessel is less than 10 minutes, preferably, less than 5 minutes. The separator vessel is therefore capable of processing high amounts of the multiphase fluid. Typically, the separator vessel processes 50,000 to 100,000 barrels of multiphase fluid per day.

Another advantage of the process of the present invention is that that the size and number of the downstream separator vessels may be reduced compared with a conventional separation of the multiphase fluid. Yet a further advantage of the process of the present invention is that it is envisaged that the water content of the hydrocarbon phase that is withdrawn from the separator vessel (or from the final separator vessel of a series of vessels) may be less than 0.5 weight% thereby allowing for a reduction in the size of an electrostatic coalescer that is used to remove low amounts of water from the separated liquid hydrocarbon stream.

As discussed above, the treated multiphase fluid may be subjected to further heating in the separator vessel to assist in separating the liquid hydrocarbon and aqueous phases. This further heating raises the temperature of the liquid hydrocarbon phase. However, an advantage of the irradiation treatment of the present invention is that the temperature to which the liquid hydrocarbon phase is heated is substantially lower than in the absence of selective heating of the aqueous phase of the multiphase fluid. For example, where it is necessary to bulk heat the multiphase fluid in a separator vessel to a temperature of 90°C to effect separation of its component liquid hydrocarbon and aqueous phases, it is envisaged that separation of the multiphase fluid in a separator vessel arranged downstream of the electromagnetic radiation treatment zone may be achieved at a temperature of as low as 60°C for the liquid hydrocarbon phase. Preferably, the irradiated multiphase fluid is heated in the separator vessel such that the liquid hydrocarbon phase reaches a temperature of from about 45 to 115°C, although temperatures of about 50 to 65°C are preferred. Typically, the pressure within the separator vessel is in the range of 5 to 50 bar.

It has been found that the power demand for the method of the present invention is significantly less than a method that relies on bulk heating of the entire multiphase fluid that flows from a flow line into a separator vessel (i.e. where there is no temperature differential between the aqueous and liquid hydrocarbon phases). Typically, the power demand is less than 50%, preferably, less than 25% of the power demand for a method that relies on bulk heating of the entire multiphase fluid in a separator.

It is envisaged that the treated multiphase fluid that is introduced into the separator vessel may be passed through an inlet device, for example, a cyclone or baffles to assist in separating any gaseous hydrocarbon phase into a head space of the separator vessel. The inlet device may have the further advantage of reducing the turbulence of the multiphase fluid such that the multiphase fluid adopts a laminar or stratified flow regime in the separator vessel thereby assisting separation of the multiphase fluid into its component phases.

Although the present invention has been described in relation to separation of the multiphase fluid into its component phases in a separator vessel, it is also envisaged that the treated multiphase fluid may be separated using alternative separators, for example, using a centrifugal separator, a hydrocyclone or t-junction separator. Such separators are well known to the person skilled in the art.

It is envisaged that the method of the present invention may not be in continuous use. Thus, where prior art techniques for separating a multiphase fluid are satisfactory, the multiphase fluid will not be subjected to electromagnetic irradiation. The method of the present invention may then be deployed as the volume of intermediate emulsion layer begins to build up in, for example, a separator vessel. During deployment of the method of the present invention, it is preferred that the multiphase fluid is either subjected to a plurality of pulses of electromagnetic radiation or is continuously subjected to electromagnetic radiation in the electromagnetic radiation treatment zone. Where the multiphase fluid is subjected to a plurality of pulses of electromagnetic radiation, the exposure time is based on the summed duration of the pulses.

In a further embodiment of the present invention, the multiphase fluid may be pretreated by being passed into a separator vessel where the multiphase fluid separates into an upper liquid hydrocarbon layer, a lower aqueous layer and an intermediate water-in-oil emulsion layer. Optionally, a gaseous hydrocarbon phase may separate into a headspace of the separator vessel. Accordingly, an emulsion stream comprising a water-in-oil emulsion may be withdrawn from the intermediate emulsion layer and may be subjected to electromagnetic irradiation outside of the separator vessel in accordance with the present invention. Thus, the term multiphase fluid comprising an aqueous phase dispersed in a liquid hydrocarbon phase encompasses an emulsion comprising emulsified droplets of aqueous phase dispersed in a continuous liquid hydrocarbon phase. Pre-treatment of the multiphase fluid in a separator vessel is advantageous, as a portion of the aqueous phase is removed prior to subjecting the emulsion stream to electromagnetic irradiation. Accordingly, loss of energy into any of the aqueous phase that is not in the form of emulsified aqueous droplets (i.e. into macroscopic aqueous domains) is thereby reduced.

The emulsion stream may be irradiated as it flows through a flow line which is in fluid communication with an outlet and inlet of the separator vessel. Thus, the emulsion stream may be withdrawn from the intermediate emulsion layer and may be circulated through an external recycle line where the emulsion stream is irradiated with electromagnetic radiation in an electromagnetic radiation treatment zone before returning the irradiated (demulsified) stream to the separator vessel. Alternatively, two or more separator vessels may be arranged in series, typically, 2 or 3 separator vessels. The emulsion stream withdrawn from the intermediate emulsion layer of the first separator vessel in the series flow through a flow line where the emulsion stream is subjected to electromagnetic radiation in an electromagnetic radiation treatment zone before passing the irradiated (demulsified stream) to the second separator vessel in the series. If an emulsion layer begins to build up in the second separator vessel in the series, an emulsion stream is removed from the intermediate emulsion layer of the second separator vessel in the series and flows through a flow line where it is subjected to electromagnetic irradiation in an electromagnetic radiation treatment zone before passing the irradiated (demulsified stream) to the third separator vessel in the series. Preferably, a section of the flow line(s) acts as a tubular microwave chamber arranged such that microwave radiation penetrates radially into the flowing emulsion stream. Suitably, the microwave chamber supports an appropriate distribution of electric field for treating the flowing emulsion stream. The emulsion stream may be withdrawn from the intermediate emulsion layer of the separator tank using at least one withdrawal means, for example, at least one nozzle located within the intermediate emulsion layer. The withdrawal means may be attached to and carried by a float device which is adapted to float within the intermediate emulsion layer such that the emulsion stream is withdrawn therethrough and is passed into the flow line where the emulsion stream is to be subjected to electromagnetic irradiation. Alternatively, a plurality of withdrawal means may be located at different levels within the separator vessel wherein each withdrawal means has an open and closed position. Suitably a level instrument is provided for determining the position of the intermediate emulsion layer in the separator vessel. Accordingly, one or more of the withdrawal means that are located within the intermediate emulsion layer is opened while any of the plurality of withdrawal means located outside the intermediate emulsion layer (for example, in the hydrocarbon layer or aqueous layer) are closed. Also, the withdrawal means may be fixed in place in the separator vessel and the position of the intermediate emulsion layer may be controlled such that the withdrawal means lies within the emulsion layer, for example, by adjusting the rate of withdrawal of the aqueous stream from the lower aqueous layer. Where the irradiated stream is recycled to the separator vessel, a pump is preferably located in the flow line upstream of the location where the emulsion is subjected to electromagnetic irradiation. Positioning the pump downstream of the location in the flow line where the emulsion is subjected to electromagnetic irradiation should be avoided as there is a risk of the emulsion reforming owing to the pump shearing the irradiated (demulsified) stream. Where the irradiated emulsion stream is recycled to the separator vessel, the withdrawn emulsion stream is suitably subjected to electromagnetic irradiation at the elevated pressure prevailing in the separator vessel thereby avoiding the need to de-pressurize the emulsion stream and to re-pressurize the irradiated (demulsified) stream. Where the irradiated stream is passed to a further separator vessel, this further separator vessel is preferably at a lower pressure than the vessel from which the emulsion stream is withdrawn such that there is no requirement for a pump.

Optionally, a demulsifier may be added to the multiphase fluid to enhance the rate of separation into its component phases. Where the multiphase fluid is treated as it flows through a flowline, the emulsifier should be added at a sufficient distance upstream of the location where the multiphase fluid is subjected to electromagnetic irradiation in order to achieve good mixing of the emulsifier with the multiphase fluid. Where an emulsion stream is withdrawn from the intermediate emulsion layer and is irradiated outside of the separator vessel, the demulsifier is preferably added to the withdrawn emulsion stream upstream of the electromagnetic radiation treatment zone and preferably, upstream of any pump. The demulsifier may be selected from any known demulsifier that is not degraded by microwave irradiation. Typically, the demulsifiers will have a molecular weight in the range 500 to 5000, preferably 500 to 2000. The demulsifier suitably has a hydrophilic-lipophilic balance value of above 9, preferably in the range 9 to 30, for example, 9 to 15. Demulsifiers which will not degrade when exposed to microwave irradiation include those which contain functional groups such as ethers, amines, ethyoxylated alcohols, sulfonates and mixtures thereof.

The amount of demulsifier added to the multiphase fluid is typically in the range of 5 to 100 ppm, preferably, 10 to 25 ppm based on the amount that enters the hydrocarbon phase. Additionally, a delivery solvent may be employed. The delivery solvent is suitably miscible with the liquid hydrocarbon phase of the multiphase fluid. Where the hydrocarbon phase is a crude oil, the delivery solvent may be, for example, a crude oil distillate boiling in the range of about 70 to 450°C. Where the oil phase is a crude oil distillate fraction, the delivery solvent may, for example, be the crude oil distillate fraction or a component thereof. It is also envisaged that the delivery solvent may be a conventional solvent that is miscible with the oil, for example an alcohol, ether, or mixture thereof. The delivery solvent may be present in an amount of from 30 to 75% weight in the demulsifier.

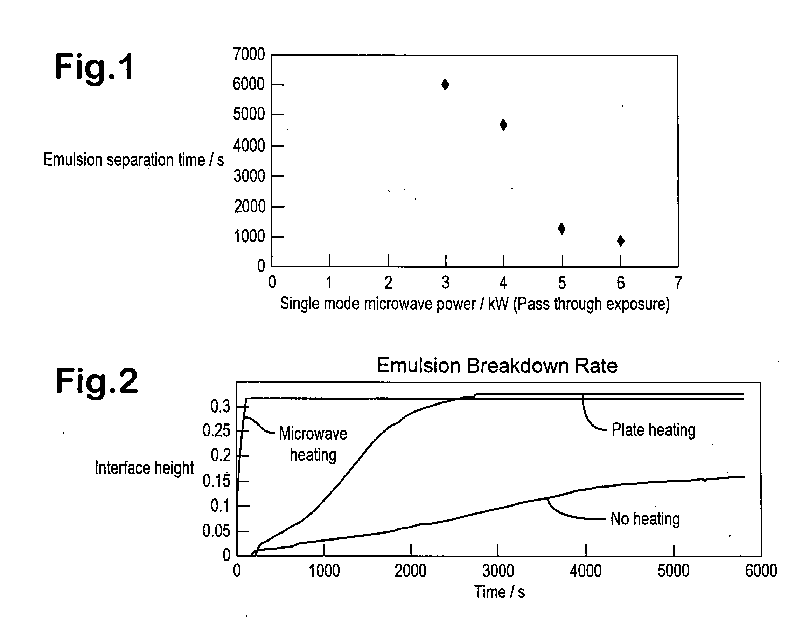

The present invention will now be illustrated by reference to Figures 1 and 2 and to the following Examples.

Example 1

An apparatus was employed that allowed an oil/water emulsion to be exposed to an electric field for a pre-determined period of time. The resultant exposure time for each batch of emulsion was approximately 0.5 seconds.

The experiments were carried out on 250ml oil/water emulsions where the oil phase was a crude oil from the Harding Field in the North Sea.

Experiments were carried out at input powers of 3, 4, 5 and 6kW. It was found that an input power in excess of 7kW resulted in almost immediate emulsion separation. The results from these studies are presented in Figure 1 which illustrates separation time versus single mode microwave power for the 250ml oil/water emulsions using a pass-through microwave exposure technique.

The results show that separation time is greatly enhanced by increasing the microwave power density. Microwave treatment in single mode cavities typically produces much higher power densities (power density is proportional to electric field squared) than its equivalent multimode cavity. The results of these single mode studies suggest that a short exposure (of less than 1 second) in a high power density cavity results in a significant reduction in oil/water separation time.

Comparative Example 1

Emulsions 1 to 3 were prepared using identical mixing routines with each emulsion comprising 70% by volume Harding crude oil and 30% by volume water. Emulsion 1 was subjected to microwave irradiation for 160 seconds in a 800 W multimode microwave cavity; Emulsion 2 was treated by conventional heat transfer via a heat plate set to a temperature of 100°C; and Emulsion 3 was left untreated thereby acting as a control.

The hot plate experiment was designed to give a relative assessment of microwave heating versus conventional heating. The results of the experiments (separation rate comparison) are presented in Figure 2. It was found that microwave irradiation of Emulsion 1 resulted in a 90% reduction in separation time compared with the hot plate treatment of Emulsion 2 and a 98% reduction in separation time compared with the untreated emulsion.

**Claims**

1.  A method for separating a multiphase fluid comprising an aqueous phase dispersed in a liquid hydrocarbon phase into its component phases, the method comprising:

    (a) passing the multiphase fluid through an electromagnetic radiation treatment zone wherein the aqueous phase of the multiphase fluid is selectively heated by subjecting the multiphase fluid to electromagnetic radiation of wavelength 1MHz to 10GHz for an exposure time of less than 5 seconds, preferably, less than 1 second, with a power density in the aqueous phase of at least $10^5$ Wm$^{-3}$, preferably, at least $10 \times 10^9$ Wm$^{-3}$;
    (b) passing the irradiated multiphase fluid from the electromagnetic radiation treatment zone to a separator wherein the multiphase fluid is separated into its component liquid hydrocarbon and aqueous phases; and

(c) withdrawing a liquid hydrocarbon stream and an aqueous stream from the separator.

**2.** A method as claimed in Claim 1 wherein the multiphase fluid is a produced fluid from a hydrocarbon production well.

**3.** A method as claimed in Claim 2 wherein the produced fluid additionally comprises a gaseous hydrocarbon phase and the multiphase fluid is separated into its component gaseous hydrocarbon, liquid hydrocarbon and aqueous phases in step (b) either using a gaseous hydrocarbon-liquid hydrocarbon-water separator or a gas separator that is located upstream of a liquid hydrocarbon-water separator.

**4.** A method as claimed in Claim 1 wherein the multiphase fluid comprises a crude oil distillate fraction having an aqueous phase dispersed therein.

**5.** A method as claimed in any one of the preceding claims wherein at least 90%, of the electromagnetic radiation is absorbed by the dispersed aqueous phase of the multiphase fluid thereby selectively heating the aqueous phase.

**6.** A method as claimed in any one of the preceding claims wherein the electromagnetic radiation selectively heats the dispersed aqueous phase to a temperature of at least 50°C, preferably, to a temperature in the range 60 to 100°C.

**7.** A method as claimed in any one of the preceding claims wherein a temperature differential of at least 20°C, preferably, at least 50°C develops between the selectively heated aqueous phase and the liquid hydrocarbon phase of the multiphase fluid.

**8.** A method as claimed in any one of the preceding claims wherein the aqueous phase of the multiphase fluid has salts dissolved therein.

**9.** A method as claimed in any one of the preceding claims wherein the electromagnetic radiation treatment zone is a section of flow line comprising a multimode microwave cavity and the section of the flow line is either provided with at least one microwave transparent window through which microwave radiation is transmitted into the multiphase fluid from a wave guide that is external to the section of flow line or microwave radiation is transmitted into the multiphase fluid using a waveguide that penetrates through the wall of the section of flow line.

**10.** A method as claimed in any one of the preceding claims wherein the multiphase fluid is passed into a separator vessel where the multiphase fluid separates into an upper liquid hydrocarbon layer, a lower aqueous layer and an intermediate water-in-oil emulsion layer, and wherein an emulsion stream comprising a water-in-oil emulsion is withdrawn from the intermediate emulsion layer and is passed through an electromagnetic radiation treatment zone where the emulsion stream is subjected to electromagnetic irradiation thereby forming an irradiated stream.

**11.** A method as claimed in Claim 10 wherein the emulsion stream is passed through a recycle line that is in fluid communication with an outlet and inlet of the separator vessel wherein a section of the recycle line comprises the electromagnetic radiation treatment zone and the emulsion stream is subjected to electromagnetic radiation in the electromagnetic radiation treatment zone thereby forming the irradiated stream that is recycled to the separator vessel.

**12.** A method as claimed in Claim 10 wherein two separator vessels are arranged in series, the emulsion stream is withdrawn from the intermediate emulsion layer of the first separator vessel in the series and flows through a flow line wherein a section of the flow line comprises an electromagnetic radiation treatment zone and the emulsion stream is subjected to electromagnetic radiation in the electromagnetic radiation treatment zone thereby forming the irradiated stream that is passed to the second separator vessel in the series.

**13.** A method as claimed in any one of the preceding claims wherein a demulsifier is added to the multiphase fluid to enhance the rate of separation of the multiphase fluid into its component phases.

## Fig.1

Emulsion separation time / s

Single mode microwave power / kW (Pass through exposure)

## Fig.2

Emulsion Breakdown Rate

Interface height

Microwave heating

Plate heating

No heating

Time / s

EP 1 970 109 A1

| | European Patent Office | EUROPEAN SEARCH REPORT | Application Number |
|---|---|---|---|
| | | | EP 07 25 0955 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/12289 A (ABB RESEARCH LTD [CH]; NILSEN PAAL J [NO]; KORNFELDT ANNA [SE]; NYGREN) 22 February 2001 (2001-02-22)<br>* page 2, line 18 - line 29 *<br>* page 3, line 14 - line 24 *<br>* page 6, line 13 - page 7, line 6 *<br>* page 7, line 15 - line 20 *<br>----- | 1-10,12 | INV.<br>B01D17/04<br>C10G32/02<br>C10G33/02<br>C02F1/30 |
| X | WO 01/46353 A1 (IND MICROWAVE TECHNOLOGIES INC [US]; DUQUESNE UNIVERSITY [US]) 28 June 2001 (2001-06-28)<br>* page 11, line 13 - line 22 *<br>* page 12, line 29 - line 39 *<br>* page 13, line 14 - line 33 *<br>* page 14, line 36 - page 15, line 4 *<br>* claims 1,3-5; figures 4-6 *<br>----- | 1,5-10 | |
| D,X | US 4 582 629 A (WOLF NICHOLAS O [US]) 15 April 1986 (1986-04-15)<br>* column 2, line 14 - line 48 *<br>* column 3, line 32 - line 40 *<br>* claims 1-11 *<br>----- | 1-8,10,13 | |
| X | US 4 853 507 A (SAMARDZIJA NIKOLA [US]) 1 August 1989 (1989-08-01)<br>* column 3, line 58 - column 4, line 9 *<br>* column 5, line 58 - column 6, line 63 *<br>----- | 1-10,13 | TECHNICAL FIELDS SEARCHED (IPC)<br><br>B01D<br>C10G<br>C02F |
| X,D | US 4 889 639 A (HUDGINS ROGER L [US] ET AL) 26 December 1989 (1989-12-26)<br>* column 2, line 36 - line 68 *<br>* column 3, line 23 - line 32; claim 1 *<br>----- | 1-8,10,11 | |

The present search report has been drawn up for all claims

| Place of search | Date of completion of the search | Examiner |
|---|---|---|
| Munich | 9 August 2007 | Roider, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 0955

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2007

| Patent document cited in search report | | Publication date | Patent family member(s) | | Publication date |
|---|---|---|---|---|---|
| WO 0112289 | A | 22-02-2001 | AU | 6740600 A | 13-03-2001 |
| | | | BR | 0012990 A | 30-04-2002 |
| | | | CN | 1370089 A | 18-09-2002 |
| | | | NO | 993968 A | 19-02-2001 |
| | | | OA | 12152 A | 05-05-2006 |
| | | | ZA | 200200710 A | 25-04-2003 |
| WO 0146353 | A1 | 28-06-2001 | AU | 2912401 A | 03-07-2001 |
| | | | US | 7045038 B1 | 16-05-2006 |
| US 4582629 | A | 15-04-1986 | NONE | | |
| US 4853507 | A | 01-08-1989 | NONE | | |
| US 4889639 | A | 26-12-1989 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4582629 A

- US 4810375 A